**Europäisches Patentamt**

**European Patent Office**

**Office européen des brevets**

(11) Veröffentlichungsnummer: **0 120 264**

**A2**

(12) ## EUROPÄISCHE PATENTANMELDUNG

(21) Anmeldenummer: **84101557.1**

(22) Anmeldetag: **15.02.84**

(51) Int. Cl.³: **B 01 D 13/00**

(30) Priorität: **24.02.83 DE 3306500**

(43) Veröffentlichungstag der Anmeldung:
**03.10.84 Patentblatt 84/40**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Beer, Ekkehard**
**Liebigstrasse 4**
**D-6208 Bad Schwalbach(DE)**

(72) Erfinder: **Hohl, Gerd**
**Heinrich-Zille-Strasse 41**
**D-6200 Wiesbaden(DE)**

(72) Erfinder: **Sieburg, Hanns-Jürgen**
**Walkmühlstrasse 9**
**D-6200 Wiesbaden(DE)**

(54) **Kreuzstromdünnkanalmodul.**

(57) Es wird eine Vorrichtung zur Durchführung von Membrantrennprozessen nach dem Kreuzstromprinzip beschrieben, welche einen von Fluiden durchströmbaren Hohlkörper mit Zu- und Ableitungsarmaturen für die dem Membrantrennprozeß zu unterwerfenden Fluide umfaßt, ein als Laminat ausgebildetes Membranträgerelement, eine beidseitig auf das Trägerelement aufgebrachte semipermeable Membranschicht und eine Ableitung für die durch die Membran hindurchtretenden Stoffe. Das Trägerelement ist dabei aus wellenförmig strukturiertem, selbsttragendem, einen durchgehenden Hohlraum bildendem Material aufgebaut, in welchem Öffnungen vorgesehen sind, die den Durchlaß von Fluid ermöglichen, und auf dem Trägerelement beidseitig festhaftend ist eine Membranschicht aufgebracht, welche die wesentlichen Bereiche der Oberfläche des Trägerelements flächendeckend und den wellenförmigen Unebenheiten folgend überzieht.

FIG.1

EP 0 120 264 A2

HOECHST AKTIENGESELLSCHAFT
KALLE Niederlassung der Hoechst AG

83/K 012                              14. Februar 1984
                                      WLJ-DC.Ho-bl

Kreuzstromdünnkanalmodul

Die Erfindung betrifft eine Vorrichtung zur Durchführung von Membrantrennprozessen, wie sie in näheren Einzelheiten dem Oberbegriff von Anspruch 1 zu entnehmen ist.

Es ist bereits bekannt, zur Abscheidung einzelner Komponenten aus Fluiden, insbesondere aus Lösungen, semipermeable Membranen zu verwenden. So werden semipermeable Membranen verwendet zur Abscheidung flüssiger Komponenten aus Flüssigkeitsmischungen, zur Abscheidung gasförmiger Komponenten aus Gasmischungen und zur Abscheidung flüssiger Lösemittel aus diese Lösemittel sowie darin gelöste Stoffe enthaltenden Mischungen sowie Dispersionen und Emulsionen. Mehr und mehr Bedeutung gewinnen derartige Abscheidungsprozesse speziell im Zusammenhang mit Frischwasserbereitung aus Meer- und Flußwasser, aber auch bei Prozeßführungen sowie bei Verfahren der Biotechnologie.

Das Material, aus dem diese semipermeablen Membranen bestehen, ist meist ein organisches Polymeres, wie z.B. Celluloseacetat oder Polyacrylnitril, Copolymere aus Acrylnitril und Vinylpyrrolidon, Polysulfone, Polyamide sowie Polymere und Copolymere auf Basis fluorierter Kohlenwasserstoffe, welches für den Trennungsprozeß allerdings sehr dünn ausgebildet sein muß und daher nur eine geringe mechanische Festigkeit aufweist.

Es ist daher üblich, zum Schutz der strukturell schwachen Membranstoffe gegen Verformung oder Beschädigung durch hydraulischen Druck oder mechanische Einwirkung diese mit einem Träger- bzw. Stützmaterial zu versehen. Derartige Trägermaterialien können beispielsweise Gewebe, Wirrfaservliese oder mikroporöse Folien sein. Es können auch keramische Materialien, gesinterte Kunststoffe oder auch Metalle verwendet werden. Diese alle gehören seit langem zum Stand der Technik und sind in vielen Druckschriften beschrieben worden, für die stellvertretend die DE-AS 26 55 014 genannt sei.

Bei Membrantrennprozessen ist einer der Betriebsparameter, der die erhältliche Durchsatzmenge beeinflußt, die mit dem zugeführten fließfähigen Medium in Berührung gelangende Gesamtoberfläche der Membran. Um eine möglichst große Membranoberfläche je Bauvolumeneinheit zu bewirken, sind zahlreiche Vorrichtungen beschrieben worden, die u.a. Membranstapel, Membransäcke oder gewickelte Rohre aus Membranstoffen aufweisen. Ebenfalls stellvertretend für viele sei hier genannt die DE-AS 14 42 420.

Nicht allein die genützte Oberfläche ist jedoch für die vorteilhafte Ausgestaltung von Vorrichtungen zur Durchführung von Membrantrennprozessen von Bedeutung, sondern als ebenso wichtiger Parameter ist hierbei die Art der Überströmung der Membranoberfläche zu berücksichtigen. Optimal geführte Strömungsführungen verhindern Ablagerungen auf der Membran, die zu Belagbildungen und/oder Porenverstopfungen führen können, senken die Konzen-

HOECHST   AKTIENGESELLSCHAFT
KALLE  Niederlassung der Hoechst AG

- 3 -

trationspolarisation an der aktiven Membranschicht auf
ein Minimum und gewährleisten eine optimale Permeation.
Zur Ausbildung von Strömungswegen, auf denen das fließfähige Medium an die Membranoberfläche herantreten kann,
werden daher Abstandshalter, in der Literatur auch "spacer" genannt, in geschichtete oder gewickelte Vorrichtungen zur Durchführung von Membrantrennprozessen eingebracht. Abstandshalter werden z.B. beschrieben in der
DE-OS 28 29 893.

Ein Abstandshalter aus einer gewellten Folie ist bekannt
aus der DE-OS 25 27 231. In dieser Druckschrift wird eine
Vorrichtung beschrieben, die sich zum Trennen von gelösten Stoffen und Flüssigkeiten eignet und nach dem Prinzip
der umgekehrten Osmose arbeitet. Der zwischen den Membranoberflächen angeordnete gewellte Abstandshalter weist
an den Rändern Kerben auf, durch welche die durch die
Wellungen entstehenden Kanäle verbunden sind, wodurch ein
fortlaufender, schlangenartig hin- und hergehender Durchlauf für die zu behandelnde Flüssigkeit bewerkstelligt
wird.

Die Nachteile, die durch die als Strömungsbrecher und
Turbulenzpromotoren wirkenden Abstandshalter entstehen,
sind bereits bekannt, und eine Lösung dieser Nachteile
wird in der Deutschen Patentanmeldung P 31 48 312.7 vorgeschlagen, welche eine Membranfolie mit entsprechend geformten integrierten Oberflächenprofilierungen zum Gegenstand hat. Die mit dieser Folie bzw. durch eingewickelte
oder zwischengelegte Spacer gebildeten Membranabstände,

HOECHST AKTIENGESELLSCHAFT
KALLE Niederlassung der Hoechst AG

- 4 -

welche der Breite der Strömungskanäle entsprechen, liegen im Bereich von 0,2 bis maximal 3 mm. Bei Fluiden, enthaltend grobdisperse Lösungen oder sedimentierende Stoffe, sowie bei Lösungen, die zur Agglomeration neigen, haben sich aber derart beengte Strömungsverhältnisse als nachteilig erwiesen, weil zu leicht Verstopfungen auftreten können.

Ungestörtere Fließwege lassen sich bei Vorrichtungen erzielen, welche rohrförmige Membranen für das Trennverfahren einsetzen. Um auch hierbei eine möglichst große Membranfläche auf begrenztem Raum unterzubringen, ging man dazu über, den Rohrdurchmesser zu verringern und die dünneren Rohre bündelweise zu Strömungskörpern zusammenzufassen.

Im Extremfall kommt man auf diesem Wege zu den bekannten Kapillar- oder Hohlfaser-Modulen, wie sie beschrieben sind in den US-PSen 3 228 877 und 3 339 341. Hierbei erhält man allerdings wieder Strömungskanäle, welche in ihren kleinsten Abmessungen vergleichbar sind mit den bei gewickelten oder geschichteten Membranen auftretenden Strömungskanälen.

Aufgabe der vorliegenden Erfindung ist es somit, eine Vorrichtung zu schaffen, welche sowohl die Vorteile einer hohen Packungsdichte und damit einer großen verfügbaren Membranfläche als auch die optimale Führung der Strömungswege und damit gute Ausnutzung der vorhandenen Membranfläche bietet, ohne die Gefahr zu beinhalten, daß Verstopfungen oder Belagbildungen durch agglomerierte oder sedimentierte Teilchen auftreten.

Gelöst wird diese Aufgabe durch eine Vorrichtung zur Durchführung von Membrantrennprozessen nach dem Kreuzstromprinzip, umfassend einen von Fluiden durchströmbaren Hohlkörper mit Zu- und Ableitungsarmaturen für die dem Membrantrennprozeß zu unterwerfenden Fluide, ein als Laminat ausgebildetes Membranträgerelement, eine beidseitig auf das Trägerelement aufgebrachte semipermeable Membranschicht und eine Ableitung für die durch die Membran hindurchtretenden Stoffe, dadurch gekennzeichnet, daß das Trägerelement aus wellenförmig strukturiertem, selbsttragendem, einen durchgehenden Hohlraum bildendem Material aufgebaut ist, in welchem Öffnungen vorgesehen sind, die den Durchlaß von Fluid ermöglichen, und daß auf dem Trägerelement beidseitig festhaftend eine Membranschicht aufgebracht ist, welche die wesentlichen Bereiche der Oberfläche des Trägerelements flächendeckend und den wellenförmigen Unebenheiten folgend überzieht.

Es ist bereits aus der US-PS 2 599 604 ein Filterelement bekannt, welches im wesentlichen aus einem gewellten und einem flachen Gewebe besteht, welche wickelartig zusammengewunden sind und in der Art vorliegen, daß jeweils benachbarte Röhren, die durch die Wellungen hervorgerufen werden, abwechselnd ein Ende offen und das andere Ende verschlossen haben. Aus dieser Anordnung resultiert allerdings keine Verbesserung der Strömungsverhältnisse des Fluids, wie dies gemäß Aufgabenstellung der vorliegenden Erfindung angestrebt werden soll, sondern alle Flüssigkeit muß das die Wellungen bildende Gewebe durchdringen, bevor sie abgeleitet werden kann. Dies ist das typische Merkmal eines Frontalfiltrationsprozesses, wie er nicht von der vorliegenden Erfindung mitumfaßt werden soll.

Membrantrennprozesse kommen vor allen Dingen bei der Lösung solcher Separationsprobleme zur Anwendung, bei denen herkömmliche Filtrationsmethoden nicht mehr zum Ziel führen, so zum Beispiel beim Aufkonzentrieren von Lösungen oder bei Reinigungsprozessen von Fluiden mit Waschlösungen unter Ausnutzung osmotischer Gleichgewichte. Membrantrennprozesse werden beispielsweise in der Medizin für zahlreiche therapeutische und diagnostische Zwecke eingesetzt (künstliche Niere/künstliche Leber). Auch in der Biotechnologie werden Substrate und/oder Produkte mit Membranen fraktionierend aufgearbeitet. Ferner lassen sich Prozeßabläufe in der Nahrungsmittelindustrie vorteilhaft durch die gezielte Anwendung von Membrantrennprozessen verbessern. Insbesondere gab die frühzeitige und erfolgreiche Anwendung in der milch- und molkeverarbeitenden Industrie Impulse auch für verbesserte Lösungen von Abwasserproblemen auf anderen Sektoren. In der metallverarbeitenden Industrie haben sich Membrantrennprozesse beim Wiederaufbereiten von Elektrotauchlacken sowie Bohr- und Schmierölemulsionen erfolgreich durchgesetzt. Auch bei der Anreicherung spezieller Komponenten aus der Gasphase benutzt man heute Membranen, weil andere Methoden aufwendiger und damit kostspielig sind.

HOECHST AKTIENGESELLSCHAFT
KALLE Niederlassung der Hoechst AG

- 7 -

Die Membrantrennprozesse, wie sie mit der erfindungsgemäßen Vorrichtung durchgeführt werden sollen, laufen bevorzugt nach dem Kreuzstromprinzip ab. Das Kreuzstromprinzip ist vornehmlich bekannt aus der Technik des Wärmeaustausches und der Kühlapparaturen, und es wird bevorzugt dann angewendet, wenn ein besonders intensiver Austausch von Wärme angestrebt werden soll. Auch eine Kreuzstromtrocknung ist bekannt, mit welcher besonders kurze
Trockenzeiten erzielt werden.

Das besondere Charakteristikum des Kreuzstromprinzips
liegt in dem Umstand, daß die Strömungsrichtungen der im
Austausch stehenden Fluide stets im rechten Winkel zueinander stehen. Dies ist bei der erfindungsgemäßen Vorrichtung dadurch verwirklicht, daß das dem Membrantrennprozeß zu unterwerfende Fluid durch die Kanäle geführt
wird, die durch die Wellungen des Trägerelements gebildet
werden, und daß senkrecht zu der Strömungsrichtung des
Fluids die aus dem Fluid abzutrennenden Stoffe durch die
Membran hindurchtreten und in den durch das gewellte Trägerelement gebildeten Hohlraum gelangen, woraus sie dann
über eine Ableitung entfernt werden.

Unter dem Begriff "Fluid" sollen im Rahmen der Erfindungsbeschreibung jegliche fließfähigen Medien zusammengefaßt werden. Dies können beispielsweise Gase sein oder
auch Flüssigkeiten oder Aerosole, Dispersionen, Lösungen,
Emulsionen, Aufschlämmungen und andere mehr.

Das Trägerelement, welches bei der erfindungsgemäßen Vorrichtung zur Anwendung kommt, soll aus einem flexiblen

HOECHST AKTIENGESELLSCHAFT
KALLE Niederlassung der Hoechst AG

- 8 -

oder auch starren selbsttragenden Material aufgebaut sein. Dies kann ein folienartiges Kunststoffmaterial sein oder ein Wirrfaservlies, ein Gewebe oder Gewirke aus Kunststoffäden, es kann aber auch aus Metall gebildet sein, beispielsweise in Form einer dünnen Metallfolie oder eines Netzes oder Siebes aus Metallfäden. In der Ausführungsform, bei der das Trägerelement aus starrem selbsttragendem Material aufgebaut ist, können auch mineralische Träger in Frage kommen. Bevorzugt ist das Trägerelement aus Kunststoffolie aufgebaut, welche eine perforierte Struktur aufweist, also entweder porös oder siebartig mit einer Vielzahl von Löchern pro Flächeneinheit versehen ist. Als Kunststoffmaterial können dabei Polymere oder Copolymere verwendet werden aus Kohlenwasserstoffen mit 2 bis 10 Kohlenstoffatomen, bevorzugt mit 2 bis 4 Kohlenstoffatomen. Es kommen ferner zur Anwendung Polyamide, Polyester, enthaltend aromatische organische Säuren, Polyethylenterephthalat, Polymere, gebildet aus halogenierten Kohlenwasserstoffen, wie Polyvinylchlorid, sowie Polymere aus olefinisch ungesättigten organischen Säuren sowie deren Estern.

Aus dem vorstehend beschriebenen Material ist das Trägerelement so aufgebaut, daß zwei flächige Gebilde, von welchen mindestens eines eine gewellte Struktur besitzt, aufeinanderliegen, an den Kanten flüssigkeits- und/oder gasdicht miteinander verbunden sind und auf diese Art einen durchgehenden Hohlraum zwischen sich einschließen. Die Verbindung an den Kanten kann durch Heiß- oder Kaltsiegeln, gegebenenfalls nach Aufbringen einer Zwischen-

HOECHST AKTIENGESELLSCHAFT
KALLE Niederlassung der Hoechst AG

- 9 -

schicht mit Siegeleigenschaften, oder durch Verschweißen oder einfaches Verkleben bewirkt werden.

Bevorzugt wird eine Folie, welche zur einen Hälfte gewellte Strukturierung aufweist, zur anderen Hälfte eine glatte Oberfläche besitzt, an der Stelle, an der die Bereiche mit der gewellten Oberfläche in jene mit der glatten Oberfläche übergehen, umgeschlagen, so daß die Unterseite des gewellten mit der Unterseite des glatten Bereichs zusammenzuliegen kommen, und das so entstandene zweischichtige Laminat wird an den drei offenen Kanten dicht miteinander verbunden. Als "glatt" soll im Zusammenhang mit der Beschreibung der Erfindung eine Folie verstanden werden, die keine wellenförmige Oberfläche aufweist.

Die Wellungen, die durchgehend oder unterbrochen ausgebildet sein können, verlaufen bevorzugt parallel bzw. im rechten Winkel zu den Außenkanten, sie können aber auch schräg dazu angeordnet sein. Die Wellen sollen im wesentlichen sinusförmig oder sinusähnlich ausgebildet sein, wobei Maxima und Minima einen Höhenunterschied von 2 bis 30 mm, bevorzugt von 5 bis 15 mm, aufweisen.

Die gewellte Folie per se ist nicht Gegenstand der vorliegenden Erfindung, aber durch die Abstände der Wellen sowie deren Ausbildung in Berg, Tal und Flanke werden die für die Wirkung der erfindungsgemäßen Vorrichtung besonders wesentlichen Strömungskanalabmessungen vorgegeben.

HOECHST  AKTIENGESELLSCHAFT
KALLE  Niederlassung der Hoechst AG

- 10 -

Auf das vorstehend beschriebene Trägerelement ist beidseitig festhaftend eine Membranschicht aufgebracht. Dies kann ebenfalls durch Verschweißen, Versiegeln oder Verkleben an den Rändern bewirkt werden. Die Membranschicht überzieht die wesentlichen Bereiche der Oberfläche des Trägerelements flächendeckend und den wellenförmigen Unebenheiten folgend. Unter den "wesentlichen Bereichen" sind die gesamte Ober- und Unterseite des Trägerelements zu verstehen. Nicht zu den wesentlichen Bereichen sind zu rechnen die Stelle, an der die Ableitung für die durch die Membranschicht hindurchgetretenen Stoffe angebracht ist, oder die seitlichen Verbindungsnähte des Trägerelements sowie die Abschrägungen an den Stirnseiten der Wellenberge.

Um ein gutes Anliegen der Membran, vor allem an der gewellten Oberfläche des Trägerelements, zu gewährleisten und um eventuell bei der Membranfolie vorhandenen Rückstellkräften entgegenzuwirken, ist die Membran an der gewellten Oberfläche, bevorzugt in den Tälern der Wellen, punktförmig mit dem Trägerelement verklebt.

Die Membran besteht aus den im Stand der Technik bekannten Materialien, wie z.B. Celluloseacetat, Polyacrylnitril, Copolymeren aus Acrylnitril und Vinylpyrrolidon, Polyamiden, Polysulfonen oder Copolymeren auf Basis von Acrylaten und Methacrylaten oder von halogenierten Kohlenwasserstoffen, welche zu Folien geformt sind mit einer Dicke zwischen 1 und 1000 $\mu$m, bevorzugt zwischen 20 und 200 $\mu$m. Die Membran ist bevorzugt auf einer Schicht aus Wirrfaservlies oder Gewebe aufgebracht, welche zum einen der Verbesserung der mechanischen Eigenschaften der Membran dient und zum anderen als Drainageschicht die Ableitung der durch die Membran hindurchgetretenen Stoffe in die in dem Trägerelement angebrachten Perforationen gewährleistet. Die Wirrfaservlies- oder Gewebeschicht befindet sich zwischen dem Trägerelement und der auf dessen Oberfläche aufgebrachten Membranschicht.

Das als Trägerelement dienende Laminat weist mindestens eine Ableitung für die durch die Membran in den Hohlraum gelangten Stoffe auf, welche ein Schlauch sein kann, dessen freie Öffnung in den Hohlraum des Trägerelements reicht und der mit dem Trägerelement eine Einheit bildet, indem er mit ihm verklebt oder verschweißt ist. Falls es für bestimmte Anwendungsgebiete erforderlich ist, können selbstverständlich auch mehrere Ableitungen an einem Trägerelement vorhanden sein.

Das Trägerelement mit der darauf aufgebrachten Membranschicht ist zur bestimmungsgemäßen Anwendung in der erfindungsgemäßen Vorrichtung entweder zu einem Wickel angeordnet, oder es sind mehrere in einer Ebene liegende Trägerelemente mit darauf aufgebrachten Membranschichten senkrecht übereinander gestapelt. Für den bevorzugt unter Druck ablaufenden Membrantrennprozeß ist die vorstehend beschriebene Anordnung von einem rohr- oder kastenförmigen Gehäuse umgeben und bildet mit diesem, zusammen mit den Zu- und Ableitungen für das dem Membrantrennprozeß zu unterwerfende Fluid sowie mit der oder den ebenfalls an

HOECHST   AKTIENGESELLSCHAFT
KALLE   Niederlassung der Hoechst AG

- 12 -

dem Gehäuse angebrachten Ableitung(en) für die durch die
Membran hindurchgetretenen Stoffe, den erfindungsgemäßen
Kreuzstromdünnkanalmodul. Der Modul ist geeignet zur Behandlung von Fluiden mit sowohl niedriger als auch hoher
Viskosität. Es können auch solche Fluide dem Membrantrennprozeß unterworfen werden, die in feinverteilter
Form Feststoffe enthalten oder zu Agglomeration neigen,
die also bei herkömmlichen Modulen zu Verstopfungen und
Belagbildungen führen. Gerade darin ist der besondere
Vorteil des erfindungsgemäßen Kreuzstromdünnkanalmoduls
zu sehen.

Der vorstehend beschriebene Kreuzstromdünnkanalmodul soll
nun anhand der Zeichnungen noch anschaulicher dargestellt
werden, ohne jedoch auf die angeführten Ausführungsformen
beschränkt zu sein.

Figur 1 zeigt einen Querschnitt eines Trägerelements mit
aufgebrachter Membranschicht in seitlicher Ansicht entlang der Linie A-A von Figur 2.

Figur 2 zeigt einen Schnitt durch ein Trägerelement mit
aufgebrachter Membranschicht entlang der Linie B-B.

Figur 3 zeigt einen Schnitt durch ein Trägerelement mit
aufgebrachter Membranschicht entlang der Linie C-C.

Figur 4 zeigt einen Modul gemäß der Erfindung mit einem
kastenförmigen Gehäuse in Seitenansicht.

Figur 5 zeigt einen Modul gemäß der Erfindung mit einem kastenförmigen Gehäuse in Draufsicht.

Figur 6 zeigt einen Schnitt durch den Modul entlang der Linie D-D.

Figur 7 zeigt einen Schnitt durch den Modul entlang der Linie E-E.

Figur 8 zeigt einen Modul gemäß der Erfindung mit einem rohrförmigen Gehäuse in Seitenansicht.

Figur 9 zeigt einen Modul gemäß der Erfindung mit einem rohrförmigen Gehäuse in Draufsicht.

Figur 10 zeigt einen Schnitt durch einen Modul entlang der Linie F-F.

Figur 11 zeigt einen Schnitt durch einen Modul entlang der Linie G-G.

Figur 12 zeigt einen Schnitt durch einen Modul entlang der Linie F-F in anderer Variante.

Figur 13 zeigt einen Schnitt durch einen Modul entlang der Linie H-H.

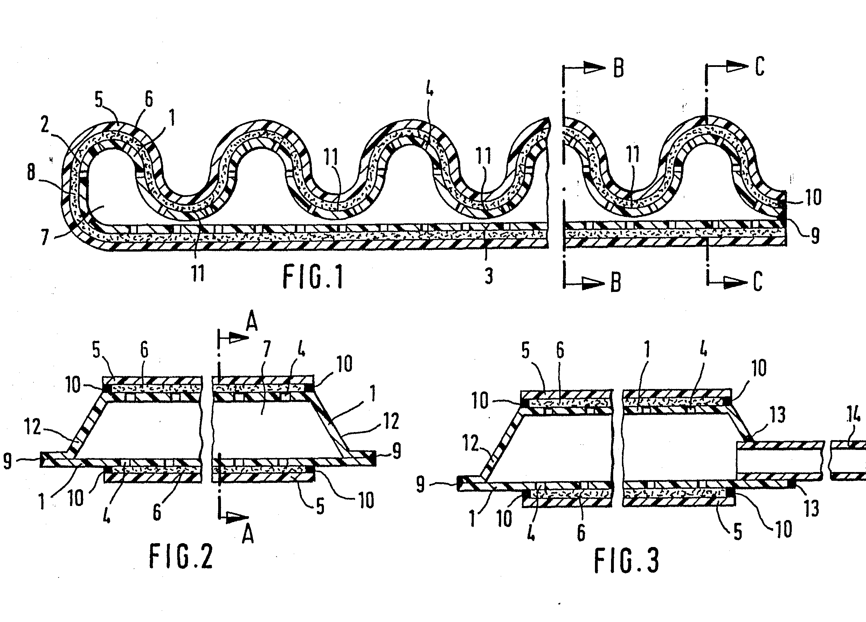

Das in Figur 1 dargestellte Trägerelement 1 besteht aus zwei Schichten, von denen die eine 2 eine gewellte Struktur hat, während die andere 3 glatt ist. Das Trägerelement weist Löcher 4 auf, durch welche die Stoffe, die durch die Membran 5 in die zwischen Membran und Trägerelement liegende Drainageschicht 6 gelangen, in den von Trägerelement und darauf aufgebrachter Membranschicht umschlossenen durchgehenden Hohlraum 7 gelangen. Diejenige Schicht des Trägerelements mit gewellter Struktur geht am Umschlag 8 in die Schicht mit glatter Oberfläche über. An dem dem Umschlag 8 gegenüberliegenden Ende des Trägerelements ist die gas- und/oder flüssigkeitsdichte Verschweißung 9 dargestellt und auch die Verklebung 10 der Membranschicht mit dem Trägerelement. Die Membranschicht weist zusätzlich in den Tälern der Wellen mehrere punktförmige Verklebungen 11 auf. Die Strömungsrichtung des dem Membrantrennprozeß zu unterwerfenden Fluids verläuft in dieser Darstellung senkrecht zur Papierebene, während sich die durch die Membran hindurchtretenden Stoffe in der Papierebene bewegen.

In Figur 2 ist ein Schnitt dargestellt durch einen Wellenberg des Trägerelements 1, überzogen mit der zweischichtigen Membranschicht aus Membran 5 und Drainageschicht 6, durch den der Hohlraum 7 umschlossen wird. Die Membranschicht ist an den Verklebungen 10 mit dem Trägerelement 1 verbunden. Nicht von der Membranschicht überzogen sind die Verschweißungen 9 und die Abschrägungen 12 an den Stirnseiten der Wellenberge des Trägerelements.

In Figur 3 ist ein weiterer Schnitt durch einen Wellenberg dargestellt, diesmal an der Stelle, wo sich die Ableitung 14 für die durch die Membran durchtretenden Stof-

0120264

fe befindet. Dargestellt ist das Trägerelement 1 mit den Löchern 4, gebildet aus Membran 5 und Drainageschicht 6, der Membranschicht, die an den Verklebungen 10 mit dem Trägerelement 1 verbunden ist. Die durch ein Schlauchstück gebildete Ableitung 14 ist an den Verklebungen 13 mit dem Trägerelement 1 verbunden.

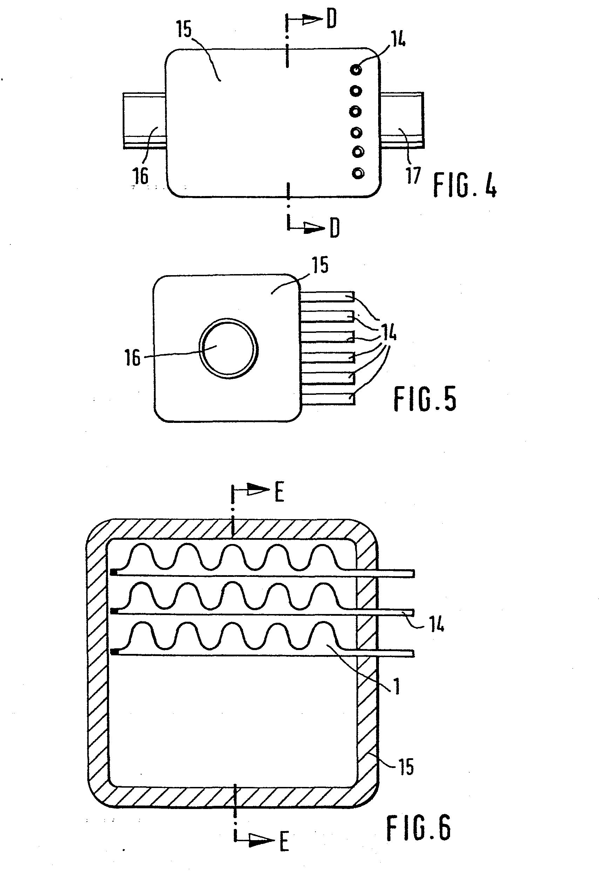

Figur 4 zeigt einen Modul mit einem kastenförmigen Gehäuse 15. Ferner dargestellt sind mehrere Ableitungen 14 für die durch die Membran hindurchtretenden Stoffe sowie Zuleitung 16 und Ableitung 17 für das dem Membrantrennprozeß zu unterwerfende Fluid.

Figur 5 zeigt ebenfalls einen Modul mit einem kastenförmigen Gehäuse 15 aus einem anderen Winkel. Auch in dieser Figur sind mehrere Ableitungen 14 für die durch die Membran hindurchtretenden Stoffe sowie die Zuleitung 16 für das dem Membrantrennprozeß zu unterwerfende Fluid dargestellt.

Figur 6 zeigt einen Schnitt durch einen Modul mit kastenförmigem Gehäuse 15. Zu sehen sind mehrere übereinander gestapelte Trägerelemente 1 mit darauf aufgebrachter Membranschicht, die allerdings in der Figur zur Vereinfachung nicht dargestellt ist, mit den jeweils dazu gehörenden Ableitungen 14.

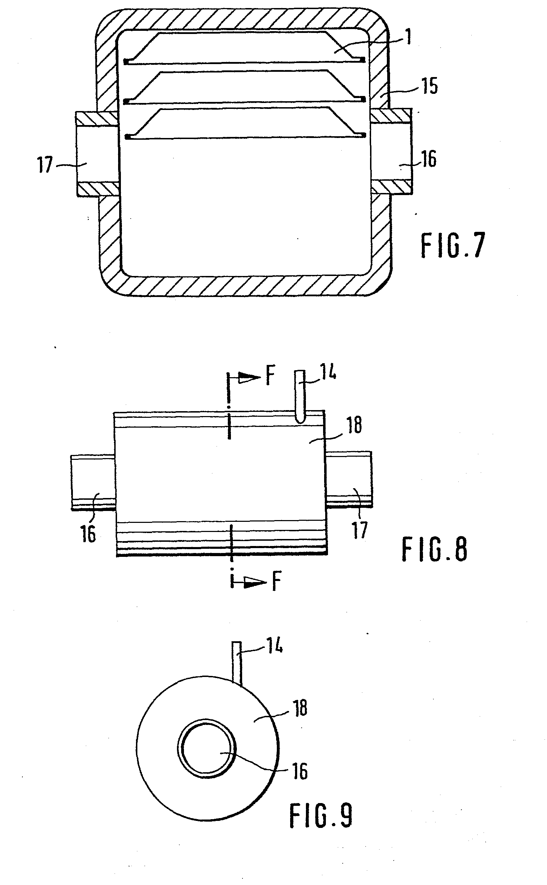

Figur 7 zeigt ebenfalls einen Schnitt durch einen Modul mit kastenförmigem Gehäuse 15, aber unter einem anderen Winkel. Auch in dieser Figur sind mehrere Trägerelemen-

HOECHST AKTIENGESELLSCHAFT
KALLE Niederlassung der Hoechst AG

- 16 -

te 1 übereinander gestapelt. Ferner sind dargestellt Zuleitung 16 und Ableitung 17 für das Fluid, welches dem Membrantrennprozeß zu unterwerfen ist.

In Figur 8 ist ein Modul dargestellt mit einem Gehäuse 18. Seitlich an dem Gehäuse ist eine Ableitung 14 dargestellt sowie Zuleitung 16 und Ableitung 17 für das Fluid, welches dem Membrantrennprozeß zu unterwerfen ist.

Figur 9 zeigt einen Modul mit rohrförmigem Gehäuse 18 aus einem anderen Winkel. Auch die Ableitung 14 für die durch die Membran hindurchtretenden Stoffe sowie die Zuleitung für das Fluid sind dargestellt.

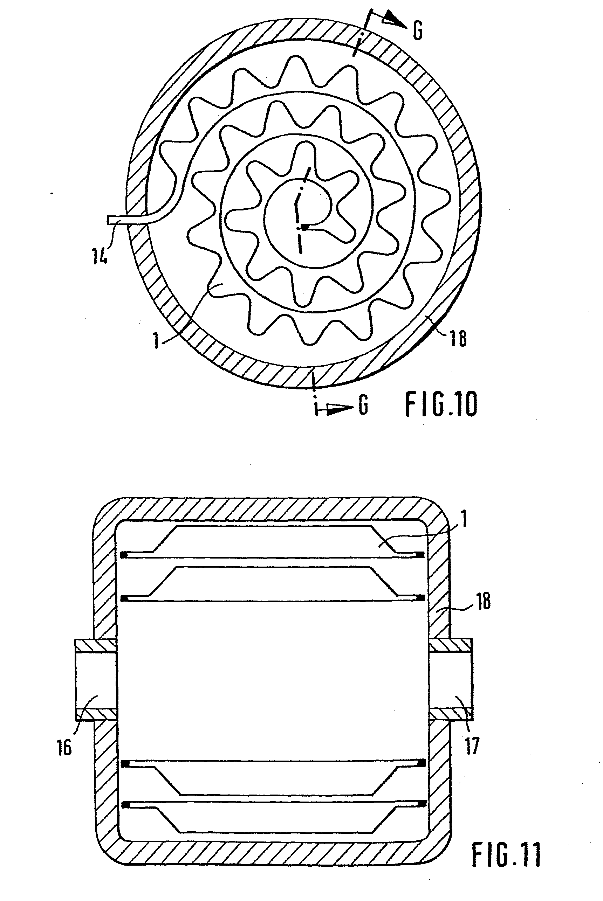

Figur 10 zeigt einen Schnitt durch einen Modul mit einem rohrförmigen Gehäuse 18. Das Trägerelement 1 mit der Membranschicht, die in dieser Darstellung ebenfalls zur Vereinfachung weggelassen wurde, ist hierbei in Form eines Wickels angeordnet. Seitlich aus dem Gehäuse 18 austretend ist die Ableitung 14 dargestellt, mit welcher die durch die Membran hindurchtretenden Stoffe entfernt werden.

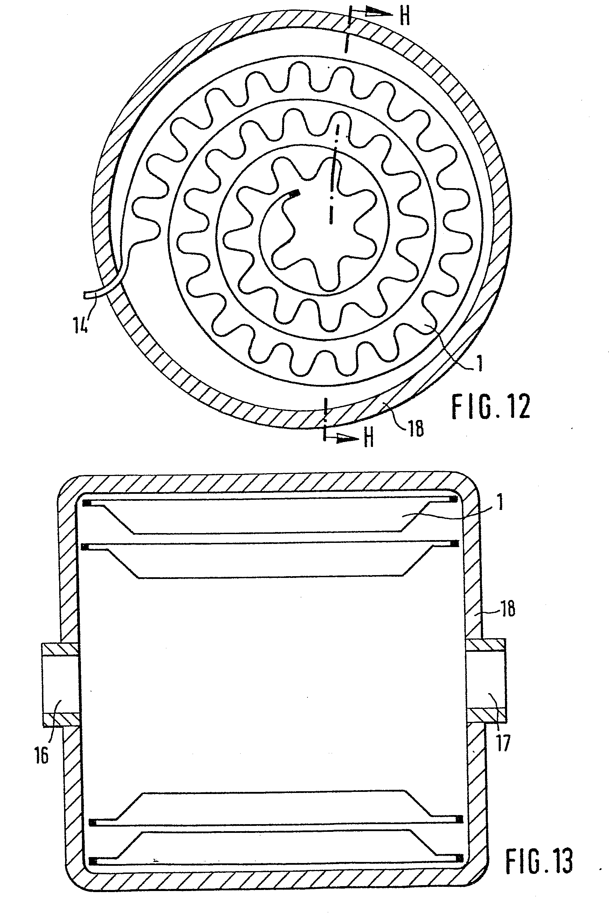

Figur 11 zeigt ebenfalls einen Schnitt durch einen Modul mit rohrförmigem Gehäuse 18. Dargestellt sind die Trägerelemente 1, die in Form eines Wickels angeordnet sind, sowie Zuleitung 16 und Ableitung 17 für das Fluid.

Figur 12 zeigt im Prinzip den gleichen Schnitt, wie er bereits in Figur 10 dargestellt ist, der einzige Unter-

- 17 -

schied besteht darin, daß die Wickelanordnung des Trägerelements 1 so angeordnet ist, daß die Oberfläche, welche
die gewellte Struktur aufweist, nicht der Rohrwandung zugewendet ist, wie dies in Figur 10 dargestellt ist, sondern bei der vorliegenden Darstellung dem Gehäusemittelpunkt. Aus dieser Anordnung ergeben sich andersartig geformte Strömungskanäle für das dem Membrantrennprozeß zu
unterwerfende Fluid, welche für besondere Anwendungen erforderlich sein können.

Figur 13 zeigt einen Schnitt durch einen Modul mit rohrförmigem Gehäuse 18, wobei das Trägerelement 1 in der in
Figur 12 dargestellten Wickelanordnung vorliegt.

Der Kreuzstromdünnkanalmodul, wie er gemäß der vorliegenden Erfindung offenbart ist, eignet sich besonders zur
Durchführung von Verfahren, welche unter den Begriffen
Hyperfiltration, Ultrafiltration, Mikrofiltration und Hämofiltration in der Literatur bekannt sind; er eignet
sich auch genauso zur Gastrennung. Besonders bevorzugt
wird der erfindungsgemäße Kreuzstromdünnkanalmodul bei
Ultrafiltrationsprozessen zur Verarbeitung von Milch- und
Molkereiprodukten eingesetzt, weil bei diesen Prozessen
die Gefahr der Belagbildung auf den Membranoberflächen
besonders groß ist.

----------

HOECHST AKTIENGESELLSCHAFT
KALLE Niederlassung der Hoechst AG

83/K 0 12                        - 18 -                14. Februar 1984
                                                       WLJ-DC.Ho-bl


Patentansprüche


1. Vorrichtung zur Durchführung von Membrantrennprozessen nach dem Kreuzstromprinzip, umfassend einen von
Fluiden durchströmbaren Hohlkörper mit Zu- und Ableitungsarmaturen für die dem Membrantrennprozeß zu unterwerfenden Fluide, ein als Laminat ausgebildetes Membranträgerelement, eine beidseitig auf das Trägerelement aufgebrachte semipermeable Membranschicht und eine Ableitung
für die durch die Membran hindurchtretenden Stoffe, dadurch gekennzeichnet, daß das Trägerelement aus wellenförmig strukturiertem, selbsttragendem, einen durchgehenden Hohlraum bildendem Material aufgebaut ist, in welchem
Öffnungen vorgesehen sind, die den Durchlaß von Fluid ermöglichen, und daß auf dem Trägerelement beidseitig festhaftend eine Membranschicht aufgebracht ist, welche die
wesentlichen Bereiche der Oberfläche des Trägerelements
flächendeckend und den wellenförmigen Unebenheiten folgend überzieht.


2. Vorrichtung nach Anspruch 1, dadurch gekennzeichnet, daß das Trägerelement aus Metall oder Kunststoff
aufgebaut ist und in der Art eines porösen Körpers, eines
Netzes oder Siebes eine Vielzahl von Löchern pro Flächeneinheit aufweist.


3. Vorrichtung nach Anspruch 1 oder 2, dadurch gekennzeichnet, daß das Trägerelement ein zweischichtiges Laminat ist, gebildet aus zwei flächigen Gebilden, von denen
mindestens eines eine gewellte Struktur aufweist, welche

HOECHST AKTIENGESELLSCHAFT
KALLE  Niederlassung der Hoechst AG

83/K 0 12                    - 19 -

an den Kanten gas- und/oder flüssigkeitsdicht miteinander
verbunden sind und im Inneren einen durchgehenden Hohlraum bilden.

4. Vorrichtung nach einem der Ansprüche 1 bis 3, dadurch gekennzeichnet, daß die Wellen des flächigen Gebildes, welches die gewellte Struktur aufweist und aus welchem das Trägerelement gebildet ist, im wesentlichen sinusförmigen Verlauf haben, wobei der Höhenunterschied
zwischen Minimum und Maximum jeweils 2 bis 30 mm, bevorzugt 5 bis 15 mm, beträgt.

5. Vorrichtung nach einem der Ansprüche 1 bis 4, dadurch gekennzeichnet, daß die Membranschicht eine synthetische Membran umfaßt, welche aus einer Folie aus Celluloseacetat oder Polyacrylnitril oder Copolymeren aus
Acrylnitril und Vinylpyrrolidon oder Polyamiden oder
Polysulfonen oder Copolymeren auf Basis von Acrylaten und
Methacrylaten oder von halogenierten Kohlenwasserstoffen,
die eine Foliendicke von 1 bis 1000 /um, bevorzugt von 20
bis 200 /um, aufweist, gebildet ist.

6. Vorrichtung nach einem der Ansprüche 1 bis 5, dadurch gekennzeichnet, daß die Membranschicht eine erste
Schicht und eine zweite Schicht umfaßt, wobei die erste
Schicht die Membran selbst ist und die zweite Schicht
eine Drainageschicht, auf der die Membran aufgebracht ist
und die gleichzeitig der Verbesserung der mechanischen
Eigenschaften der Membranschicht dient, und wobei die
zweite Schicht aus vliesartigem, gewebeartigem oder
schwammartigem Material aufgebaut ist.

HOECHST AKTIENGESELLSCHAFT
KALLE Niederlassung der Hoechst AG

83/K 012                    - 20 -


7. Vorrichtung nach einem der Ansprüche 1 bis 6, dadurch gekennzeichnet, daß die Membranschicht durch Verschweißungen, Versiegelungen oder Verklebungen an ihren Rändern beidseitig festhaftend auf dem Trägermaterial aufgebracht ist und bevorzugt auf derjenigen Oberfläche des Trägerelements, welche gewellte Struktur aufweist, in den von den Wellen gebildeten Tälern zusätzlich punktförmig mit dem Trägerelement verklebt ist.

8. Vorrichtung nach einem der Ansprüche 1 bis 7, dadurch gekennzeichnet, daß sie ein rohrförmiges Gehäuse umfaßt und daß das Trägerelement mit darauf aufgebrachter Membranschicht in Form eines Wickels angeordnet ist.

9. Vorrichtung nach einem der Ansprüche 1 bis 7, dadurch gekennzeichnet, daß sie ein kastenförmiges Gehäuse umfaßt und daß Trägerelemente mit darauf aufgebrachten Membranschichten in stapelförmiger Anordnung vorliegen.

10. Verwendung einer Vorrichtung nach einem der Ansprüche 1 bis 9 zur Durchführung von Ultrafiltrationsprozessen bei der Verarbeitung von Milch- und Molkereiprodukten.


----------

FIG.1

FIG.2

FIG.3

FIG. 4

FIG.5

FIG.6

HOECHST AKTIENGESELLSCHAFT
83/K 012

FIG.7

FIG.8

FIG.9

HOECHST AKTIENGESELLSCHAFT
83/K 012

0120264

4 / 5

FIG.10

FIG.11

HOECHST AKTIENGESELLSCHAFT
83/K 012

FIG.12

FIG.13

HOECHST AKTIENGESELLSCHAFT
83/K 012